(19) **Europäisches Patentamt / European Patent Office / Office européen des brevets**

(11) **EP 4 618 040 A1**

(12) # EUROPEAN PATENT APPLICATION

(43) Date of publication:
**17.09.2025   Bulletin 2025/38**

(21) Application number: **24163005.2**

(22) Date of filing: **12.03.2024**

(51) International Patent Classification (IPC):
**G06V 10/82** [(2022.01)]    **G06V 30/262** [(2022.01)]

(52) Cooperative Patent Classification (CPC):
**G06V 30/262; G06V 10/82**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **TOYOTA JIDOSHA KABUSHIKI
KAISHA
Toyota-shi, Aichi-ken, 471-8571 (JP)**

(72) Inventors:
• **ALJUNDI, Rahaf
1140 Brussels (BE)**

• **SIEFI, Soroush
1140 Brussels (BE)**
• **OLMEDA REINO, Daniel
1140 Brussels (BE)**

(74) Representative: **Cabinet Beau de Loménie
103, rue de Grenelle
75340 Paris Cedex 07 (FR)**

Remarks:
Amended claims in accordance with Rule 137(2)
EPC.

(54) **METHOD OF PERFORMING ANNOTATION FREE SEMANTIC SEGMENTATION OF AN IMAGE**

(57)   This method of performing a semantic segmentation of an image is implemented by a computer and comprises the steps of:
- extracting (E50) a classification token for at least one crop of said image;
- determining (M10) the presence, in said image, of at least one object of a class belonging to a predetermined vocabulary, said determination being based on a similarity between said at least one classification token and text features extracted (E20) from a label of said class ;
- selecting (E140) at least one patch of said image based on a similarity between features of said patch and said text features;
- generating (E160) a segmentation mask for said object using said selected patches.

FIG.1

EP 4 618 040 A1

**Description**

BACKGROUND OF THE INVENTION

## 1. Field of the invention

The present disclosure relates to the field of semantic segmentation.

## 2. Description of Related Art

Semantic Segmentation is one of the most challenging vision tasks, usually requiring large amounts of training data with expensive pixel level annotations.

With the success of foundation models and especially vision-language models, recent works attempt to achieve zero-shot semantic segmentation while requiring either large scale training or additional image/pixel-level annotations.

In the field of computer vision, end-to-end training has long been the de facto standard, where all model parameters are optimized simultaneously for a given task or loss. Recently, large-scale and inexpensive training data has enabled the surge of foundation models. These models have been conversely leveraged in order to avoid the need for both expensive annotations and extensive computational requirements.

While obtaining cheap annotations and leveraging pretrained models is straightforward for image classification tasks, it remains a challenge for dense prediction tasks like semantic segmentation, as existing pretrained models lack either in local feature robustness (see reference [1]) or in semantic awareness (reference [2]).

## 3. Summary

The object of the present invention is to at least substantially remedy the above-mentioned drawbacks. In this respect, the present disclosure notably relates to a novel approach to annotation free semantic segmentation.

More precisely, the invention proposes a method for generating semantic segmentation masks as pseudo-annotations with zero pixel labels or labels at image level.

The term "zero-shot semantic segmentation setting" refers to a scenario in computer vision where a model is tasked with performing semantic segmentation on classes or categories that it has never encountered during the training phase. In other words, the method and system of the disclosure are expected to segment objects or regions belonging to classes that were not part of its training data.

Thus, and according to a first aspect, the invention concerns a method of performing a semantic segmentation of an image, said method being implemented by a computer and comprising the steps of:

- extracting a classification token for at least one crop of said image;
- determining the presence, in said image, of at least one object of a class belonging to a predetermined vocabulary, said determination being based on a similarity between said at least one classification token and text features extracted from a label of said class ;
- selecting at least one patch of said image based on a similarity between features of said patch and said text features;
- generating a segmentation mask for said object using said selected patches.

Correlatively, the invention concerns a computer system for performing a semantic segmentation of an image, the computer system comprising:

- a unit for extracting a classification token for at least one crop of said image;
- a similarity unit for determining the presence, in said image, of at least one object of a class belonging to a predetermined vocabulary, said determination being based on a similarity between said at least one classification token and text features extracted from a label of said class ;
- a unit for selecting at least one patch of said image based on a similarity between features of said patch and said text features;
- a segmenting unit for generating a segmentation mask for said object using said selected patches.

The method of performing a semantic segmentation provides a way to generate fine semantic segmentations from an image dataset with a predefined vocabulary.

Very advantageously, the method does not require available pairs of image samples and pixel-level labels. Thanks to this, the model can be used with an unrestricted set of categories, and deployed rapidly on new datasets or ontologies, without requiring retraining or fine-tuning on pixel-level annotations.

In at least one embodiment, the method of performing a semantic segmentation further comprises:

- extracting for each class label of a predetermined list, text features of this class label;
- assigning to each said crop the text feature the closest to its classification token;
- determining the presence, in said image, of at least one object of a predetermined class based on the number of crops assigned to the text feature extracted from the label of said class.

In one embodiment, the step of generating a segmentation mask comprises: if determining the center points of the selected patches ;

    i/ determining the center points of the selected patches;
    ii/ feeding the segmentation modules with these center points as query points along with said image;
    iii/ selecting as said selection mask the mask produced by SAM with the highest confidence.

In at least one embodiment of the method of performing a semantic segmentation :

- said text features are extracted from class labels by a text encoder;
- said at least one classification tokens are extracted for said at least one crop by an image encoder;

wherein said encoders having been trained jointly to match image class tokens with text features.
In one embodiment CLIP (Contrastive language-image pretraining) (see reference [1]) is used to extract query points and SAM (Segment Anything) (see reference [4]) is used to generate high quality object masks.
As known by the man skilled in the art, CLIP excels at openset image classification, but its performance are not sufficient for semantic segmentation tasks.
In at least one embodiment, the method of performing a semantic segmentation further comprises a step of oversampling the image and dividing the oversampled image into overlapping crops.
It may happen that the generated masks do not cover every object in an image and might be wrong sometimes
To overcome this, the disclosure also addresses proposes a new method and system for aligning any off-the-shelf pretrained vision encoder with text semantics, and with no human supervision.
According to a second aspect, the invention also concerns a method of training an alignment module, said method being implemented by a computer and comprising the steps of:

- using a method of performing a semantic segmentation according as mentioned above for generating at least one object segmentation masks of at least one image along with the assigned text features of the corresponding class label
- extracting patch features of at least one patch of said image;
- assigning to at least one extracted patch whose location in said image corresponds to the location of one said object segmentation mask with a pseudo label $y_i^p$ corresponding to the class label of this object;
- extracting text features from said class label;
- training said alignment module to map said the patch features on a space of said text features while optimizing a loss function maximizing the alignment of said patch features with said text features.

Correlatively, the invention concerns a computer system for training an alignment module, the computer system comprising:

- a unit for obtaining at least one object segmentation masks of at least one image along with their assigned text features of the corresponding class label using a method as mentioned above;
- a unit for extracting patch features of at least one patch of said image;
- a unit for assigning to at least one extracted patch whose location in said image corresponds to the location of one said object segmentation mask with a pseudo label corresponding to the class label of this object;
- a unit for extracting text features from said class label;
- a unit for training said alignment module to map said the patch features on a space of said text features while optimizing a loss function maximizing the alignment of said patch features with said text features.

The second aspect of this disclosure proposes to train an alignment module to align patch features produced by a vision encoder (for example a self-supervised vision encoder) with a pre-trained text encoder by using the masks generated by the segmentation method described above as additional supervision for the alignment module.
To account for the noisy pseudo annotations, we deploy a loss function that relies on pretrained text features as anchors while optimizing the visual representations and their alignment with the text features.

This is achieved by incorporating a lightweight contrastive alignment module on a pre-trained self-supervised vision encoder. The purpose of this alignment module is to align patch features with a pre-trained text encoder.

The proposed solution brings language-based semantics to any pre-trained vision encoder with minimal training. The alignment module is lightweight, uses foundational models as a sole source of supervision and shows impressive generalization capability from little training data with no annotation (see "Experiments" in the detailed description below).

The alignment module projects the rich features of a self-supervised model to the embedding space of a model trained with text-image pairs. The resulting features are both highly discriminant and are grounded to semantics, while not requiring human-generated segmentation or image annotations. It can be applied to any pretrained image or text encoder.

In one embodiment, DINOv2 (see Reference [3]) is used as an example of self-supervised model to extract the patch features. As known by the man skilled in the art, this model, when applied to a sufficiently large set of unlabelled data produce robust and generic visual features suitable for dense recognition tasks. However this model is trained without any explicit notion of semantic meaning.

Therefore, in one embodiment, the alignment module may be trained in a contrastive manner to align visual features from a DINOv2 encoder with the text embedding space of a CLIP model.

It is recalled that in "contrastive learning", the model is trained to distinguish between positive and negative examples in the feature space.

In at least one embodiment, the loss function operates both on :

(i) pairs of image patches $\langle z_i, z_j \rangle$ and
(ii) pairs of image patches and text features $\langle z_i, t_k \rangle$ ,

wherein $z_i$ is the output of a patch feature $x_i$ aligned by said alignment module.

In a particular embodiment, the different steps of the segmentation method and/or of the training are determined by computer program instructions or are implemented by a silicon chip comprising transistors suitable for constituting logic gates of a hard-wired non-programmable logic.

Consequently, the invention also relates to a computer program on an information medium, this program being able to be implemented in a controller computer, this program including instructions suitable for implementing the steps of a method as described above.

This program can use any programming language, and be in the form of source code, object code, or intermediate code between source code and object code, such as in a partially compiled form, or in any other desirable form.

The invention also relates to an information medium readable by a computer and including instructions for a computer program as mentioned above. The information medium can be any entity or device capable of storing the program. For example, the medium can include a storage means, such as a ROM, a non-volatile memory of flash type or else a magnetic recording means, for example a hard disk. Moreover, the information medium can be a transmissible medium such as an electrical or optical signal, which can be routed via an electrical or optical cable, by radio or by other means. The program according to the invention can in particular be downloaded over a network of Internet type. Alternatively, the information medium can be an integrated circuit into which the program is incorporated, the circuit being suitable for executing or being used in the execution of the method in question.

## 4. Brief description of the drawings

Features, advantages, and technical and industrial significance of exemplary embodiments of the invention will be described below with reference to the accompanying drawings, in which like signs denote like elements, and wherein:

- FIG. 1 is a flow chart representing steps of a method of performing a semantic segmentation of an image according to a specific embodiment of the invention;
- FIG. 2 represents a computer system for performing a semantic segmentation of an image according to a specific embodiment of the invention;
- FIG. 3 represents a computer system for training an alignment module according to a specific embodiment of the invention;
- FIG. 4 is a flow chart representing steps of a method of training an alignment module according to a specific embodiment of the invention;
- FIG. 5 represents a system for performing a semantic segmentation of an image using the alignment module trained by the method of figure 4.
- FIG. 6 shows patch-level alignment between image and class, comparing results obtained with CLIP-L/14 and with the invention.

## 5. Detailed description of embodiments

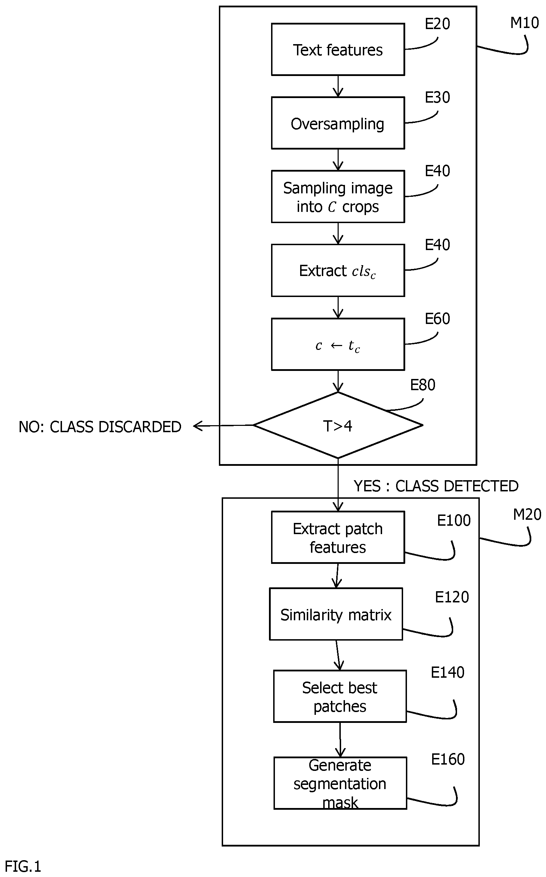

With reference to Figure 1, we will now describe the main steps of a method of performing a semantic segmentation of an image according to a particular embodiment of the invention.

At first, the method comprises a step M10 of determining if objects of predetermined classes are present in a given image IMG. In the general case, the classes present in an image are considered to be unknown.

The vocabulary therefore defines a list of assignable class labels. It can be of any type. In a specific embodiment, we consider all possible labels in a given dataset, e.g., for COCO-Stuff a set of 171 classes

Specifically, in one embodiment, given an IMG image, step M10 comprises:

(E20) : extracting text features from each class label in the vocabulary;
(E40) : sampling the image into C crops and (E50) extracting a classification token $cls_c$ for each crop c ;
(E60) : assigning to each crop c the text feature $t_c$ the closest to its classification token $cls_c$
(E80) determining that an object of a class is present in the image IMG if the label of this class has been assigned at least to a predetermined number T of the image crops. For example; T=5.

As known by the man skilled in the art, a crop is a small rectangular part of an image sampled to get a classification of different objects in the image.

In one embodiment, step M10 is realized using CLIP (Contrastive Language-Image Pretraining), a model comprising a text encoder and an image encoder trained jointly to match image class tokens with text features.

More precisely, CLIP has two main components:

(i) an image encoder CLIP_IE configured to processes an input image and extracts high-level visual features using a convolutional neural network (CNN), and
(ii) a text encoder CLIP_TE based on a transformer architecture configured to transform natural language description into a numerical representation, i.e. text features.

For more details on CLIP, the man skilled in the art may refer to reference [1].

For example, CLIP Vit-L/14 model may be uses in a specific embodiment of the invention.

In one embodiment, in order to improve the localization of objects in the image, the method of performing a semantic segmentation comprises a preliminary step E30 of oversampling the image and dividing the oversampled image into overlapping crops of CLIP's input size.

For example, in this embodiment, the features for each crop is computed separately by the CLIP's image encoder CLIP_IE and the extracted features for all the crops are rearranged into one single feature map representing the high-resolution image. The features in the overlapping areas are averaged.

As mentioned before, in one embodiment, an object of a class is considered to be present in the image IMG if the label of this class has been assigned at least to a predetermined number T of the image crops. In some embodiments, if an object of an image-level class label (for example "background") is present, the corresponding class is also considered to be present in the image. Otherwise, the class is discarded.

In case an object of a class is considered to be present in the image, the method of performing a semantic segmentation proceeds to a step M20 of generating a segmentation mask for the object in the input image.

In one embodiment step M20 comprises :

(E100) : feeding the image into an image encoder and extracting patch features (or feature maps);
(E120) : computing a similarity matrix between :

i./ the text feature of the class of each object considered to be present in the image and ;
ii./ each generated patch feature ;

(E140) : selecting for each said class a predetermined number of patches (for example 5) with highest similarity to their text feature;
(E160) : generating a segmentation mask for at least one object considered to be present in the image using said selected patches.

As know by the man skilled in the art, a patch is a small part of an image generally required for a neural network (e.g. a transformer model) to process the image. The image is generally divided into a prefixed number of patched covering the whole image no overlapping. A patch is generally quite small e.g., 14*14 pixels, a crop being usually much larger.

In one embodiment, the step E160 of generating a segmentation mask comprises:

if determining the center points of the selected patches ;
ii/ feeding SAM these center points as query points along with said image;
iii/ selecting as said selection mask the mask produced by SAM with the highest confidence.

For more information about SAM, the man skilled in the art may refer to Reference [4].

In one embodiment SAM generates 3 masks for each set of query points to account for ambiguity and produces a confidence measure (estimated IoU) for each of the generated masks. The mask with the highest confidence may be selected as the final segmentation mask for the detected object.

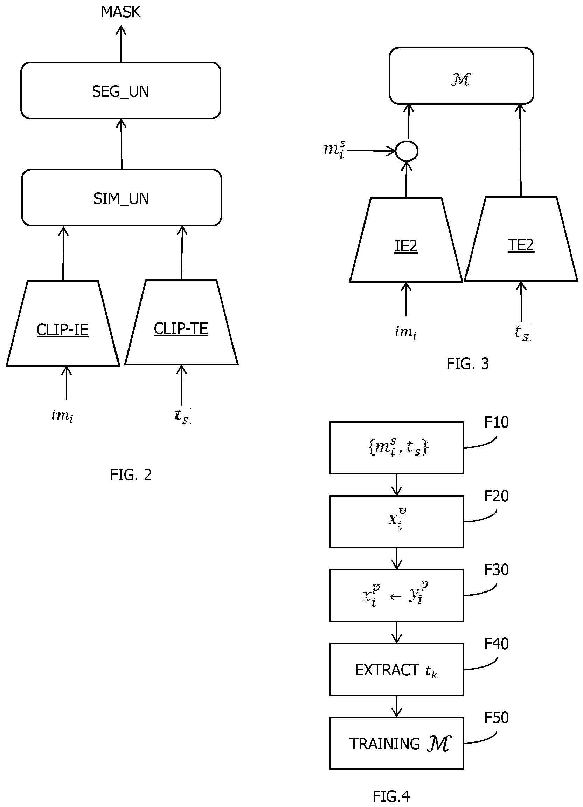

Figure 2 represents a computer system for performing a semantic segmentation of an image according to a specific embodiment of the invention.

This computer system comprises:

- a unit (for example the CLIP image encoder CLIP-IE) for extracting a classification token for at least one crop of said image;
- a unit (for example the CLIP text encoder CLIP-TE) for extracting text features from class labels; and
- a similarity unit SIM_UN for determining the presence, in said image, of at least one object of a predetermined class based on a similarity between said at least one classification token and said text features extracted (E20) from a label of said class ;
- a unit SIM_UN for selecting at least one patch of said image based on a similarity between features of said patch and said text features;
- a segmenting unit SEG_UN (for example SAM) for generating (E160) a segmentation mask for said object using said selected patches.

The similarity unit SIM_UN identifies the classes of objects present in the image , identifies text features of classes present in the image and extracts most representative patches of these text features and key points (e.g. centers) of these patches to query the segmentation unit SEG_UN.

In one embodiment, the segmentation masks of detected objects generated at step E160 and the class labels of these objects detected at step E80 are used by a method of training an alignment module $\mathcal{M}$ .

With reference Figure 3, we will now describe a computer system and the main steps of a method of training an alignment module $\mathcal{M}$ ccording to a particular embodiment of the invention.

Figure 3 shows an image encoder IE2, a text encoder TE2 and the alignment module $\mathcal{M}$ .

Preferably, the image encoder IE2 and the text encoder TE2 are pre-trained (or frozen).

Preferably, the text encoder TE2 is the same text encoder as the one used in the method of performing a semantic segmentation of an image described above, i.e. CLIP-TE.

Preferably, the image encoder IE2 is more expressive than the image encoder used in the method of performing a semantic segmentation of an image described above, for example CLIP-IE.

Preferably, the image encoder IE2 is a self-supervised pre-trained model to limit the risk of a bias towards certain classes that show supervised models.

Preferably, the image encoder IE2 is trained with no text alignment.

For example, the image encoder IE2 may be DINOv2. For more details about DINOv2 the man skilled in the art may refer to Reference [3].

We consider a dataset of D of unlabeled images $D = \{im_i\}_{i=1}^{M}$ .

The training method comprises a step F10 of generating at least one object segmentation masks for each image $im_i$ along with the assigned text features of the corresponding text labels $\{m_i^s, t_s\}$ .

In one embodiment, step F10 is carried out by using the method of performing a semantic segmentation described above.

During a step F20, each image $im_i$ is fed into the image encoder IE2 which extracts the image features $x_i^p$ of each patch of the image $im_i$, $p = 1, ... N$, where $N$ is the number of patches while ignoring the *cls* token.

The training method comprises a step F30 of assigning, to at least one patch whose location in the image $im_i$ corresponds to the location of an object segmentation mask with a pseudo label $y_i^p$ corresponding to the class label of this object, wherein $y_i^p \in \{1, .., K\}$ and $K$ is the number of detected categories in the dataset D.

The training method comprised a step F40 of the text encoder extracting K text features T = {$t_1$, $t_2$, ... , $t_K$} from the detected class label.

The training method comprises a step F50 of training the alignment module $\mathcal{M}$ to map the patch representations $\{x_i^p\}$ to a text embedding space $z_i^p = \mathcal{M}(x_i^p) \in \mathbb{R}^D$

This method is agnostic to the specific encoder used.

In one embodiment, the alignment module $\mathcal{M}$ is designed as one transformer block with multi-head self-attention layer. The self-attention layer allows each patch to attend to other patches in the image.

For notation clarity, we drop the image index and consider only an across-batch patch index i; i C {1, ..., N * B} where N is the number of patches in an image and B is the batch size.

In one embodiment, each text feature $t_k$ is treated as a prototype of each class. The similarity of a patch feature $z_i$ is to be maximized with the corresponding text prototype $t_k$; $y_i = k$ and with other patches of the same category, from any image in the same batch. Note that all the feature vectors (text and image patches) are normalized to have unit norm, and the similarities are expressed as a dot product.

In one embodiment, we construct two types of pairs:

(i) pairs of image patches (patch-patch pairs: $\langle z_i, z_j \rangle$) and
(ii) pairs of image patches and text features (patch-text pairs: < $z_i$, $t_k$ >).

In this embodiment, a patch-patch pair < $z_i$, $z_j$ > is considered positive if the patches belong to the same class $y_i = y_j$ and negative otherwise. Patch-text pairs $\langle z_i, t_k \rangle$ are positive if $y_i = k$.

In this embodiment, a loss function of two terms operating on the two types of said pairs:

$$\ell_{\text{TSupCon}} = \frac{1}{B * N + K}\left( \sum_{k=1}^{K} \ell_t(t_k) + \sum_{i}^{B*N} \ell_{\text{im}}(z_i) \right) \quad (1)$$

where B is the batch size and N is the number of patches in an image; K is the number of text features. $\ell_t$ is defined as

$$\ell_t(t_k) = \frac{1}{N_k} \sum_{i:y_i=k} \ell_t(z_i, t_k) \quad (2)$$

where $N_k$ is the number of patches with label $y = k$.

$$\ell_t\left(z_i, t_{y_i}\right) = -z_i^\mathsf{T} t_{y_i} + log\left( \sum_{k=1}^{K} \exp(z_i^\mathsf{T} t_k) + \sum_{j \neq i} \exp(z_i^\mathsf{T} z_j) \right) \quad (3)$$

The loss $\ell_t(t_k)$ defined for each text feature $t_k$, considers all the patches that belong to the category $y = k$, represented by the text feature $t_k$. The loss is optimized by maximizing the similarity of the concerned patch-text pairs, normalized over all other constructed pairs (patch-patch and patch-text pairs) for a given patch $z_i$; $y_i = k$ .

The loss applied to each patch feature may be defined as follows:

$$\ell_{\text{im}}(z_i) = \frac{1}{N_{y_i}} \sum_{l:y_l=y_i} \left( -z_i^\mathsf{T} z_l + \log \sum_{j \neq i} \exp(z_i^\mathsf{T} z_j) \right) \quad (4)$$

where $N_{yi}$ is the number of patches in the batch that have the same label as $y_i$. This loss term operates on the image patches and it maximizes the similarities of the patches of the same category across different images.

This loss function allows a smooth optimization of the different similarities while tolerating possible noisy pairs, as shown below in the loss ablation, Sec 4.4.1. The alignment module $\mathcal{M}$ may be optimized with $\ell_{TSupCon}$ (Eq. 1), for a fixed number of epochs.

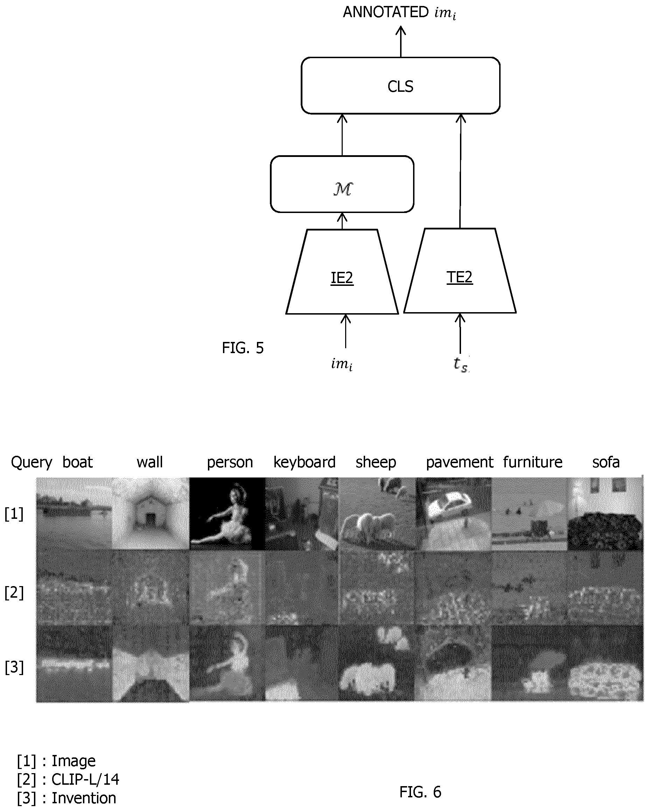

Figure 5 illustrate a system for performing a semantic segmentation of a new image $im_i$ using the alignment module M.

Image features $\{x_i\}$ are extracted from the new image, using an image encoder, for example IE2.

Image features $\{x_i\}$ extracted by the image encoder are aligned by the alignment module $\mathcal{M}$ to produce new patch features $z_i = \mathcal{M}(x_i)$ for the same patch. In other words, the alignement module $\mathcal{M}$ projects the image features into the text space.

Then a classifier CLS computes text patches similarities, so that, the most similar text feature $t_k$ is assigned to each patch features $z_i$, wherein text features are precomputed using the text encoder TE2.

The new image is annotated according to its similarity to the pre-computed vocabulary prototypes.

## 6. Experiments

Figure 6 shows the alignment of patches features with class labels after training with alignment module $\mathcal{M}$. More precisely, it shows the path-level similarity between the image and the image-level label on Pascal VOC.

First row shows the original image from Pascal VOC. Second row shows the similarity between the high-resolution patch features from CLIP-L/14 and the image-level label. Third row shows the similarity map after aligning a DINOv2-L/14 model implementing a specific embodiment of the invention.

It appears clearly the image aligned with the invention produces more consistent similarity scores for the given category than those produced by CLIP.

Table 1 below reports the mIoU (mean Intersection Over Union metric) on different datasets. Results of methods in first block are taken from TCL (Ref. [8]) while second block methods are taken from their corresponding papers.

First, training free methods, CLIP-DIY (Ref. [11]), SCCLIP (Ref. [10]), CaR (Ref. [12]) and ReCo (Ref [7])) perform inferior to the invention mostly with a large margin expect from CaR on PV-21 which can be attributed to the postprocessing of background in CaR.

Second, the invention performs best or second best on all datasets even improving over TCL trained on 15M images with image level labels. The invention outperforms TCL by a large margin of 11% on PC-59 and 27% on CO-80.

The invention outperforms SAM-CLIP (Ref. [13]) significantly on PV-21 and PC-59 while being inferior on CS-171 and ADE albeit with a smaller margin. SAM-CLIP trains SAM encoder on 41M images with no code or model available which makes it infeasible for the inventors to evaluate it on the remaining datasets. Nevertheless, it is emphasized that alignment module $\mathcal{M}$ is light and trained on almost 400 times less data for few epochs. This makes the claimed invention a plug and play approach to semantically segment any dataset.

Table 1: Semantic Segmentation performance on various datasets. Best method is marked in **bold** and second best is underlined.

| Method | Training Data | mIoU | | | | | | |
|---|---|---|---|---|---|---|---|---|
| | | PV-21 | PV-20 | PC-59 | CO-80 | CS-171 | City | ADE |
| GroupVit ([5]) | 41M+Labels | 50.4 | 79.7 | 18.7 | 24.5 | 15.3 | 11.1 | 9.2 |
| Mask Clip ([6]) | - | 38.8 | 74.9 | 23.6 | 20.6 | 16.4 | 12.6 | 9.8 |
| ReCo ([7]) | - | 25.1 | 57.7 | 19.9 | 31.6 | 14.8 | 21.1 | 11.2 |
| TCL ([8]) | 15M + Labels | 55.0 | <u>83.2</u> | <u>33.9</u> | 31.6 | 22.4 | **24.0** | **17.1** |
| CLIP-S4 ([9]) | 0.12M | - | - | 33.6 | - | 22.1 | - | - |
| SCCLIP ([10]) | - | 59.1 | - | 30.4 | - | 22.4 | - | - |
| CLIP-DIY([11]) | - | 59.0 | - | 30.4 | - | - | - | - |
| CaR ([12]) | - | **67.6** | - | 30.5 | <u>36.6</u> | - | - | |
| SAM-CLIP([13]) | 41M | 60.6 | - | 29.2 | | **31.5** | - | **17.1** |

(continued)

| Method | Training Data | mIoU | | | | | | |
|---|---|---|---|---|---|---|---|---|
| | | PV-21 | PV-20 | PC-59 | CO-80 | CS-171 | City | ADE |
| Invention | 0.12M | 65.28 | **87.33** | **40.22** | **58.76** | 27.61 | 21.61 | 14.76 |

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense.

**References**

| [1] | Alec Radford, Jong Wook Kim, Chris Hallacy, Aditya Ramesh, Gabriel Goh, Sandhini Agarwal, Girish Sastry, Amanda Askell, Pamela Mishkin, Jack Clark, et al. Learning transferable visual models from natural language supervision. In International conference on machine learning, pages 8748-8763. PMLR, 2021. |
|---|---|
| [2] | Zhuang Liu, Hanzi Mao, Chao-Yuan Wu, Christoph Feichtenhofer, Trevor Darrell, and Saining Xie. A convnet for the 2020s. In Proceedings of the IEEE/CVF conference on computer vision and pattern recognition, pages 11976-11986, 2022. |
| [3] | Maxime Oquab, Timothee Darcet, Theo Moutakanni, Huy Vo, ' Marc Szafraniec, Vasil Khalidov, Pierre Fernandez, Daniel Haziza, Francisco Massa, Alaaeldin El-Nouby, et al. Dinov2: Learning robust visual features without supervision. arXiv preprint arXiv:2304.07193, 2023 |
| [4] | Alexander Kirillov, Eric Mintun, Nikhila Ravi, Hanzi Mao, Chloe Rolland, Laura Gustafson, Tete Xiao, Spencer Whitehead, Alexander C Berg, Wan-Yen Lo, et al. Segment anything. arXiv preprint arXiv:2304.02643, 2023. |
| [5] | Jiarui Xu, Shalini De Mello, Sifei Liu, Wonmin Byeon, Thomas Breuel, Jan Kautz, and Xiaolong Wang. Groupvit: Semantic segmentation emerges from text supervision. In Proceedings of the IEEE/CVF Conference on Computer Vision and Pattern Recognition, pages 18134-18144, 2022a. |
| [6] | Chong Zhou, Chen Change Loy, and Bo Dai. Extract free dense labels from clip. In European Conference on Computer Vision, pages 696-712. Springer, 2022. |
| [7] | Gyungin Shin, Weidi Xie, and Samuel Albanie. Reco: Retrieve and co-segment for zero-shot transfer. Advances in Neural Information Processing Systems, 35:33754-33767, 2022. |
| [8] | Junbum Cha, Jonghwan Mun, and Byungseok Roh. Learning to generate text-grounded mask for open-world semantic segmentation from only image-text pairs. In Proceedings of the IEEE/CVF Conference on Computer Vision and Pattern Recognition, pages 11165-11174, 2023. |
| [9] | Wenbin He, Suphanut Jamonnak, Liang Gou, and Liu Ren. Clips4: Language-guided self-supervised semantic segmentation. In Proceedings of the IEEE/CVF Conference on Computer Vision and Pattern Recognition, pages 11207-11216, 2023. |
| [10] | Feng Wang, Jieru Mei, and Alan Yuille. Sclip: Rethinking selfattention for dense |
| | vision-language inference. arXiv preprint arXiv:2312.01597, 2023a. |
| [11] | Monika Wysoczanska, Micha ' el Ramamonjisoa, Tomasz Trzci nski, and Oriane Simeoni. Clip-diy: Clip dense inference yields open- ' vocabulary semantic segmentation for-free. In Proceedings of the IEEE/CVF Winter Conference on Applications of Computer Vision, pages 1403-1413, 2024 |
| [12] | Shuyang Sun, Runjia Li, Philip Torr, Xiuye Gu, and Siyang Li. Clip as rnn: Segment countless visual concepts without training endeavor. arXiv preprint arXiv:2312.07661, 2023. |
| [13] | Haoxiang Wang, Pavan Kumar Anasosalu Vasu, Fartash Faghri, Raviteja Vemulapalli, Mehrdad Farajtabar, Sachin Mehta, Mohammad Rastegari, Once! Tuzel, and Hadi Pouransari. Sam-clip: Merging vision foundation models towards semantic and spatial understanding. arXiv preprint arXiv:2310.15308, 2023b. |

**Claims**

1. A method of performing a semantic segmentation of an image, said method being implemented by a computer and comprising the steps of:

   - extracting (E50) a classification token for at least one crop of said image;
   - determining (M10) the presence, in said image, of at least one object of a class belonging to a predetermined vocabulary, said determination being based on a similarity between said at least one classification token and text features extracted (E20) from a label of said class ;
   - selecting (E140) at least one patch of said image based on a similarity between features of said patch and said text features;
   - generating (E160) a segmentation mask for said object using said selected patches.

2. A method of performing a semantic segmentation according to Claim 1 comprising: of an image, said method being implemented by a computer and comprising the steps of:

   - extracting (E20) for each class label of a predetermined list, text features of this class label;
   - assigning to each said crop (c) the text feature ($t_c$) the closest to its classification token ($cls_c$);
   - determining (E80) the presence, in said image, of at least one object of a predetermined class based on the number of crops assigned to the text feature extracted (E20) from the label of said class.

3. A method of performing a semantic segmentation according to Claim 1 or 2 wherein:

   - said text features are extracted (E20) from class labels by a text encoder (CLIP-TE);
   - said at least one classification tokens are extracted (E50) for said at least one crop by an image encoder (CLIP-IE);

   wherein said encoders are trained jointly to match image class tokens with text features.

4. A method of performing a semantic segmentation according to any one of Claims 1 to 3 further comprising a step (E40) of oversampling the image and dividing the oversampled image into overlapping crops.

5. A method of training an alignment module, said method being implemented by a computer and comprising the steps of:

   - using (F10) a method of performing a semantic segmentation according to any one of Claims 1 to 4, for generating at least one object segmentation masks of at least one image ($im_i$) along with the assigned text features of the corresponding class label ( $\{m_i^s, t_s\}$ );
   - extracting (F20) patch features ( $x_i^p$ ) of at least one patch of said image;
   - assigning (F30) to at least one extracted patch whose location in said image ($im_i$) corresponds to the location of one said object segmentation mask with a pseudo label ( $y_i^p$ ) corresponding to the class label of this object;
   - extracting (F40) text features from said class label;
   - training (F50) said alignment module ($\mathcal{M}$) to map said the patch features ( $x_i^p$ ) on a space of said text features while optimizing a loss function ($\ell_{TSupCon}$) maximizing the alignment of said patch features ( $x_i^p$ ) with said text features.

6. A method of training an alignment module according to Claim 5 wherein said loss function ($\ell_{TSupCon}$) operates both on :

   (i) pairs of image patches $\langle z_i, z_j \rangle$ and
   (ii) pairs of image patches and text features $\langle z_i, t_k \rangle$,

   wherein $z_i$ is the output of a patch feature $x_i$ aligned by said alignment module.

**7.** A computer system for performing a semantic segmentation of an image, the computer system comprising:

- a unit (CLIP_IE) for extracting a classification token for at least one crop of said image;
- a similarity unit (SIM_UN) for determining the presence, in said image, of at least one object of a class belonging to a predetermined vocabulary, said determination being based on a similarity between said at least one classification token and text features extracted (E20) from a label of said class ;
- a unit (SIM_UN) for selecting (E140) at least one patch of said image based on a similarity between features of said patch and said text features;
- a segmenting unit (SEG_UN) for generating (E160) a segmentation mask for said object using said selected patches.

**8.** A computer system for training an alignment module, the computer system comprising:

- a unit for obtaining at least one object segmentation masks of at least one image ($im_i$) along with their assigned text features of the corresponding class label ( $\{m_i^s, t_s\}$ ) using (F10) a method according to any one of Claims 1 to 4;

- a unit for extracting (F20) patch features ( $x_i^p$ ) of at least one patch of said image;
- a unit for assigning (F30) to at least one extracted patch whose location in said image ($im_i$) corresponds to the location of one said object segmentation mask with a pseudo label ( $y_i^p$ ) corresponding to the class label of this object;
- a unit for extracting (F40) text features from said class label;

- a unit for training (F50) said alignment module ($\mathcal{M}$) to map said the patch features ( $x_i^p$ ) on a space of said text features while optimizing a loss function ($\ell_{\text{TSupCon}}$) maximizing the alignment of said patch features ( $x_i^p$ ) with said text features.

**9.** A computer program set including instructions for executing the steps of the method of any one of claims 1 to 6 when said program set is executed by at least one computer.

**10.** A recording medium readable by at least one computer and having recorded thereon at least one computer program including instructions for executing the steps of the method of any one of claims 1 to 6.

**Amended claims in accordance with Rule 137(2) EPC.**

**1.** A method of performing a semantic segmentation of an image, said method being implemented by a computer and comprising the steps of:

- extracting (E50) a classification token for at least one crop of said image;
- determining (M10) the presence, in said image, of at least one object of a class belonging to a predetermined vocabulary,
the method being **characterized in that** said determination is based on a similarity between said at least one classification token and text features extracted (E20) from a label of said class ; and **in that** the method comprises:
- selecting (E140) at least one patch of said image based on a similarity between features of said patch and said text features;
- generating (E160) a segmentation mask for said object using said selected patches.

**2.** A method of performing a semantic segmentation according to Claim 1 comprising: of an image, said method being implemented by a computer and comprising the steps of:

- extracting (E20) for each class label of a predetermined list, text features of this class label;
- assigning to each said crop ($c$) the text feature ($t_c$) the closest to its classification token ($cls_c$);
- determining (E80) the presence, in said image, of at least one object of a predetermined class based on the number of crops assigned to the text feature extracted (E20) from the label of said class.

**3.** A method of performing a semantic segmentation according to Claim 1 or 2 wherein:

- said text features are extracted (E20) from class labels by a text encoder (CLIP-TE);
- said at least one classification tokens are extracted (E50) for said at least one crop by an image encoder (CLIP-IE);
wherein said encoders are trained jointly to match image class tokens with text features.

**4.** A method of performing a semantic segmentation according to any one of Claims 1 to 3 further comprising a step (E40) of oversampling the image and dividing the oversampled image into overlapping crops.

**5.** A method of training an alignment module, said method being implemented by a computer and comprising the steps of:

- using (F10) a method of performing a semantic segmentation according to any one of Claims 1 to 4, for generating at least one object segmentation masks of at least one image ($im_i$) along with the assigned text features of the corresponding class label ($\{m_i^s, t_s\}$);
- extracting (F20) patch features ($x_i^p$) of at least one patch of said image;
- assigning (F30) to at least one extracted patch whose location in said image ($im_i$) corresponds to the location of one said object segmentation mask with a pseudo label ($y_i^p$) corresponding to the class label of this object;
- extracting (F40) text features from said class label;
- training (F50) said alignment module ($\mathcal{M}$) to map said the patch features ($x_i^p$) on a space of said text features while optimizing a loss function ($\ell_{TSupCon}$) maximizing the alignment of said patch features ($x_i^p$) with said text features.

**6.** A method of training an alignment module according to Claim 5 wherein said loss function ($\ell_{TSupCon}$) operates both on :

(i) pairs of image patches $\langle z_i, z_j \rangle$ and
(ii) pairs of image patches and text features $\langle z_i, t_k \rangle$,
wherein $z_i$ is the output of a patch feature $x_i$ aligned by said alignment module.

**7.** A computer system for performing a semantic segmentation of an image, the computer system comprising:

- a unit (CLIP_IE) for extracting a classification token for at least one crop of said image;
- a similarity unit (SIM_UN) for determining the presence, in said image, of at least one object of a class belonging to a predetermined vocabulary,
the computer system being **characterized in that** the similarity unit is configured to perform said determination based on a similarity between said at least one classification token and text features extracted (E20) from a label of said class ; and **in that** it comprises:
- a unit (SIM_UN) for selecting (E140) at least one patch of said image based on a similarity between features of said patch and said text features;
- a segmenting unit (SEG_UN) for generating (E160) a segmentation mask for said object using said selected patches.

**8.** A computer system for training an alignment module, the computer system comprising:

- a unit for obtaining at least one object segmentation masks of at least one image ($im_i$) along with their assigned text features of the corresponding class label ($\{m_i^s, t_s\}$) using (F10) a method according to any one of Claims 1 to 4;

- a unit for extracting (F20) patch features ($x_i^p$) of at least one patch of said image;
- a unit for assigning (F30) to at least one extracted patch whose location in said image ($im_i$) corresponds to the location of one said object segmentation mask with a pseudo label ($y_i^p$) corresponding to the class label of this object;
- a unit for extracting (F40) text features from said class label;

- a unit for training (F50) said alignment module ($\mathcal{M}$) to map said the patch features ( $x_i^p$ ) on a space of said text features while optimizing a loss function ($\ell_{\text{TSupCon}}$) maximizing the alignment of said patch features ( $x_i^p$ ) with said text features.

**9.** A computer program set including instructions for executing the steps of the method of any one of claims 1 to 6 when said program set is executed by at least one computer.

**10.** A recording medium readable by at least one computer and having recorded thereon at least one computer program including instructions for executing the steps of the method of any one of claims 1 to 6.

1. A method of performing a semantic segmentation of an image, said method being implemented by a computer and comprising the steps of:

- extracting (E50) a classification token for at least one crop of said image;
- determining (M10) the presence, in said image, of at least one object of a class belonging to a predetermined vocabulary, said determination being based on a similarity between said at least one classification token and text features extracted (E20) from a label of said class ;
- feeding (E100) the image into an image encoder and extracting patch features;
- computing (E120) a similarity matrix between:

  i) the text feature of the class of each object considered to be present in the image; and
  ii) each of the generated patch features;

- selecting (E140), for each said class, a predetermined number of patches of said image based on a similarity between said patch features and said text features, wherein the selected patches has highest similarity to their text features; and;
- generating (E160) a segmentation mask for said object using said selected patches.

2. A method of performing a semantic segmentation according to Claim 1 comprising: of an image, said method being implemented by a computer and comprising the steps of:

- extracting (E20) for each class label of a predetermined list, text features of this class label;
- assigning to each said crop (c) the text feature ($t_c$) the closest to its classification token ($cls_c$);
- determining (E80) the presence, in said image, of at least one object of a predetermined class based on the number of crops assigned to the text feature extracted (E20) from the label of said class.

3. A method of performing a semantic segmentation according to Claim 1 or 2 wherein:

- said text features are extracted (E20) from class labels by a text encoder (CLIP-TE);
- said at least one classification tokens are extracted (E50) for said at least one crop by an image encoder (CLIP-IE);
wherein said encoders are trained jointly to match image class tokens with text features.

4. A method of performing a semantic segmentation according to any one of Claims 1 to 3 further comprising a step (E40) of oversampling the image and dividing the oversampled image into overlapping crops.

5. A method of training an alignment module, said method being implemented by a computer and comprising the steps of:

- using (F10) a method of performing a semantic segmentation according to any one of Claims 1 to 4, for generating at least one object segmentation masks of at least one image ($im_i$) along with the assigned text features of the corresponding class label ( $\{m_i^s, t_s\}$ );

- extracting (F20) patch features ( $x_i^p$ ) of at least one patch of said image;
- assigning (F30) to at least one extracted patch whose location in said image ($im_i$) corresponds to the location of one said object segmentation mask with a pseudo label ( $y_i^p$ ) corresponding to the class label of this object;
- extracting (F40) text features from said class label;
- training (F50) said alignment module ($\mathcal{M}$) to map said the patch features ( $x_i^p$ ) on a space of said text features while optimizing a loss function ($\ell_{TSupCon}$) maximizing the alignment of said patch features ( $x_i^p$ ) with said text features.

6. A method of training an alignment module according to Claim 5 wherein said loss function ($\ell_{TSupCon}$) operates both on :

(i) pairs of image patches $\langle z_i, z_j \rangle$ and
(ii) pairs of image patches and text features $\langle z_i, t_k \rangle$,
wherein $z_i$ is the output of a patch feature $x_i$ aligned by said alignment module.

7. A computer system for training an alignment module, the computer system comprising:

- a unit for obtaining at least one object segmentation masks of at least one image ($im_i$) along with their assigned text features of the corresponding class label ( $\{m_i^s, t_s\}$ ) using (F10) a method according to any one of Claims 1 to 4;
- a unit for extracting (F20) patch features ( $x_i^p$ ) of at least one patch of said image;
- a unit for assigning (F30) to at least one extracted patch whose location in said image ($im_i$) corresponds to the location of one said object segmentation mask with a pseudo label ( $y_i^p$ ) corresponding to the class label of this object;
- a unit for extracting (F40) text features from said class label;
- a unit for training (F50) said alignment module ($\mathcal{M}$) to map said the patch features ( $x_i^p$ ) on a space of said text features while optimizing a loss function ($\ell_{TSupCon}$) maximizing the alignment of said patch features ( $x_i^p$ ) with said text features.

8. A computer program set including instructions for executing the steps of the method of any one of claims 1 to 6 when said program set is executed by at least one computer.

9. A recording medium readable by at least one computer and having recorded thereon at least one computer program including instructions for executing the steps of the method of any one of claims 1 to 6.

E20 — Text features — M10

E30 — Oversampling

E40 — Sampling image into $C$ crops

E40 — Extract $cls_c$

E60 — $c \leftarrow t_c$

E80 — T>4

NO: CLASS DISCARDED

YES : CLASS DETECTED

E100 — Extract patch features — M20

E120 — Similarity matrix

E140 — Select best patches

E160 — Generate segmentation mask

FIG.1

MASK

SEG_UN

SIM_UN

CLIP-IE    CLIP-TE

$im_i$    $t_s$

FIG. 2

$\mathcal{M}$

$m_i^s$ ○

IE2    TE2

$im_i$    $t_s$

FIG. 3

$\{m_i^s, t_s\}$ — F10

$x_i^p$ — F20

$x_i^p \leftarrow y_i^p$ — F30

EXTRACT $t_k$ — F40

TRAINING $\mathcal{M}$ — F50

FIG.4

ANNOTATED $im_i$

FIG. 5

$im_i$     $t_s$

Query  boat     wall     person  keyboard  sheep    pavement furniture   sofa

[1] : Image
[2] : CLIP-L/14
[3] : Invention

FIG. 6

Europäisches Patentamt

European Patent Office

Office européen des brevets

## EUROPEAN SEARCH REPORT

**Application Number**

EP 24 16 3005

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KANCHANA RANASINGHE ET AL: "Perceptual Grouping in Contrastive Vision-Language Models", ARXIV.ORG, CORNELL UNIVERSITY LIBRARY, 201 OLIN LIBRARY CORNELL UNIVERSITY ITHACA, NY 14853, 22 August 2023 (2023-08-22), XP091584958, * Section III; figure 1 * | 1-10 | INV. G06V10/82 G06V30/262 |
| X | JUNBUM CHA ET AL: "Learning to Generate Text-grounded Mask for Open-world Semantic Segmentation from Only Image-Text Pairs", ARXIV.ORG, CORNELL UNIVERSITY LIBRARY, 201 OLIN LIBRARY CORNELL UNIVERSITY ITHACA, NY 14853, 1 December 2022 (2022-12-01), XP091383552, * Section 3 and 4; figure 3 * | 1-10 | |
| A | LIN CHIA-YI ET AL: "Enhancing Real-Time Semantic Segmentation with Textual Knowledge of Pre-Trained Vision-Language Model: A Lightweight Approach", 2023 ASIA PACIFIC SIGNAL AND INFORMATION PROCESSING ASSOCIATION ANNUAL SUMMIT AND CONFERENCE (APSIPA ASC), IEEE, 31 October 2023 (2023-10-31), pages 551-558, XP034472246, DOI: 10.1109/APSIPAASC58517.2023.10317179 [retrieved on 2023-11-20] * the whole document * | 1-10 | **TECHNICAL FIELDS SEARCHED (IPC)** G06V |

-/--

The present search report has been drawn up for all claims

| Place of search | Date of completion of the search | Examiner |
|---|---|---|
| The Hague | 5 August 2024 | Miclea, Sorin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

| | Europäisches Patentamt European Patent Office Office européen des brevets | **EUROPEAN SEARCH REPORT** | **Application Number** EP 24 16 3005 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | SOROUSH SEIFI ET AL: "Annotation Free Semantic Segmentation with Vision Foundation Models", ARXIV.ORG, CORNELL UNIVERSITY LIBRARY, 201 OLIN LIBRARY CORNELL UNIVERSITY ITHACA, NY 14853, 24 May 2024 (2024-05-24), XP091765556, * the whole document * ----- | 1-10 | |
| | | | **TECHNICAL FIELDS SEARCHED (IPC)** |

The present search report has been drawn up for all claims

| Place of search | Date of completion of the search | Examiner |
|---|---|---|
| The Hague | 5 August 2024 | Miclea, Sorin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................
& : member of the same patent family, corresponding document

EPO FORM 1503 03.82 (P04C01)

**REFERENCES CITED IN THE DESCRIPTION**

**Non-patent literature cited in the description**

- *International conference on machine learning*, 2021, 8748-8763
- **ZHUANG LIU ; HANZI MAO ; CHAO-YUAN WU ; CHRISTOPH FEICHTENHOFER ; TREVOR DARRELL ; SAINING XIE**. *A convnet for the 2020s. In Proceedings of the IEEE/CVF conference on computer vision and pattern recognition*, 2022, 11976-11986
- **MAXIME OQUAB ; TIMOTHEE DARCET ; THEO MOUTAKANNI ; HUY VO ; MARC SZAFRANIEC ; VASIL KHALIDOV ; PIERRE FERNANDEZ ; DANIEL HAZIZA ; FRANCISCO MASSA ; ALAAELDIN EL-NOUBY et al.** *Dinov2: Learning robust visual features without supervision*, 2023
- **ALEXANDER KIRILLOV ; ERIC MINTUN ; NIKHILA RAVI ; HANZI MAO ; CHLOE ROLLAND ; LAURA GUSTAFSON ; TETE XIAO ; SPENCER WHITEHEAD ; ALEXANDER C BERG ; WAN-YEN LO et al.** *Segment anything*, 2023
- **JIARUI XU ; SHALINI DE MELLO ; SIFEI LIU ; WONMIN BYEON ; THOMAS BREUEL ; JAN KAUTZ ; XIAOLONG WANG**. Groupvit: Semantic segmentation emerges from text supervision. *In Proceedings of the IEEE/CVF Conference on Computer Vision and Pattern Recognition*, 2022, 18134-18144
- **CHONG ZHOU ; CHEN CHANGE LOY ; BO DAI**. Extract free dense labels from clip. In European Conference on Computer Vision. Springer, 2022, 696-712
- **GYUNGIN SHIN ; WEIDI XIE ; SAMUEL ALBANIE**. Reco: Retrieve and co-segment for zero-shot transfer. *Advances in Neural Information Processing Systems*, 2022, vol. 35, 33754-33767

- **JUNBUM CHA ; JONGHWAN MUN ; BYUNGSEOK ROH.** Learning to generate text-grounded mask for open-world semantic segmentation from only image-text pairs.. *In Proceedings of the IEEE/CVF Conference on Computer Vision and Pattern Recognition*, 2023, 11165-11174
- **WENBIN HE ; SUPHANUT JAMONNAK ; LIANG GOU ; LIU REN**. Clips4: Language-guided self-supervised semantic segmentation. *In Proceedings of the IEEE/CVF Conference on Computer Vision and Pattern Recognition*, 2023, 11207-11216
- **MONIKA WYSOCZANSKA ; MICHA ' EL RAMA-MONJISOA ; TOMASZ TRZCI NSKI ; ORIANE SIMEONI.** Clip-diy: Clip dense inference yields open-' vocabulary semantic segmentation for-free. *In Proceedings of the IEEE/CVF Winter Conference on Applications of Computer Vision*, 2024, 1403-1413
- **SHUYANG SUN ; RUNJIA LI ; PHILIP TORR ; XIUYE GU ; SIYANG LI**. Clip as rnn: Segment countless visual concepts without training endeavor. *arXiv preprint arXiv:2312.07661*, 2023
- **HAOXIANG WANG ; PAVAN KUMAR ANASOSALU VASU ; FARTASH FAGHRI ; RAVITEJA VEMULAPALLI ; MEHRDAD FARAJTABAR ; SACHIN MEHTA ; MOHAMMAD RASTEGARI ; ONCEL TUZEL ; HADI POURANSARI**. Sam-clip: Merging vision foundation models towards semantic and spatial understanding. *arXiv preprint arXiv:2310.15308*, 2023